(19) Europäisches Patentamt

European Patent Office

Office européen des brevets

(11) Veröffentlichungsnummer: **0 351 537 B1**

(12) **EUROPÄISCHE PATENTSCHRIFT**

(45) Veröffentlichungstag der Patentschrift: **20.04.94**

(21) Anmeldenummer: **89110332.7**

(22) Anmeldetag: **08.06.89**

(51) Int. Cl.⁵: **F16F 9/46**, B60G 15/12, B60G 17/04

(54) Feder-Dämpfer-System für Fahrzeuge.

(30) Priorität: **20.07.88 DE 3824611**

(43) Veröffentlichungstag der Anmeldung:
**24.01.90 Patentblatt 90/04**

(45) Bekanntmachung des Hinweises auf die
Patenterteilung:
**20.04.94 Patentblatt 94/16**

(84) Benannte Vertragsstaaten:
**DE FR GB IT SE**

(56) Entgegenhaltungen:
EP-A- 0 052 782     EP-A- 0 197 317
DE-A- 2 242 990     DE-A- 3 500 601
DE-A- 3 518 327     DE-A- 3 523 628
FR-A- 2 593 121

(73) Patentinhaber: **Bayerische Motoren Werke Aktiengesellschaft
Patentabteilung AJ-3
D-80788 München(DE)**

(72) Erfinder: **Müller, Rudi
Mühlstrasse 12
D-8081 Egenhofen(DE)**

(74) Vertreter: **Dexheimer, Rolf et al
Bayerische Motoren Werke Aktiengesellschaft,
Patentabteilung AJ-31
D-80788 München (DE)**

## Beschreibung

Die Erfindung bezieht sich auf ein Feder-Dämpfer-System für Fahrzeuge nach dem Oberbegriff des Patentanspruchs 1.

Bei einem bekannten derartigen System (DE-OS 35 00 601) ist ein dämpfungs-ventilloser Arbeitskolben vorgesehen, der ein Überströmen von Hydraulikflüssigkeit von der einen Arbeitskammer in die andere durch den Kolben verhindert. Jeder Arbeitskammer ist ein von einem Druckspeicher beaufschlagter Ausgleichsraum zugeordnet. Die Arbeitsräume des Zylinders sind über einen durch ein ansteuerbares Ventil verschließbaren Kanal miteinander verbunden. Zwischen einem der Arbeitsräume und dem zugehörigen Ausgleichsraum ist eine dämpfkraftabhängige Ventileinheit vorgesehen.

Dieses Feder-Dämpfer-System hat den Nachteil, daß das den Kanal verschließende Sperrventil keine nachgeschalteten Dämpfungsventile hat und ferner nur eine reine "schwarz/weiß"-Schaltung zuläßt. Es ist ein Einkammerverhalten (Federn in Serie, $c = c_1 + c_2$) oder ein Zweikammerverhalten möglich (Federn parallel, $1/c = 1/c_1 + 1/c_2$). Bei diesem System sind also keine Zwischenstellungen möglich. Das Schalten des Sperrventils ist stets mit einem sehr hohen Federratensprung verbunden. Außerdem ist keine größere Federraten-Variationsbreite möglich. Schließlich ist eine maßgeblichere Beeinflussung der Dämpfkräfte nur möglich, wenn die Dämpfungsventileinheit zusätzlich zu dem Sperrventil ansteuerbar wäre. Dies würde nicht nur den Bauaufwand deutlich erhöhen, sondern auch Synchronisationsprobleme aufwerfen.

Der Erfindung liegt die Aufgabe zugrunde, ein Feder-Dämpfer-System der vorausgesetzten Gattung zu schaffen, mit dem eine größere Federratenvariation zwischen den beiden Extremwerten des vorbekannten Systems (Einkammerverhalten, Zweikammerverhalten) erreichbar ist, wobei ferner auf einfache Weise eine Beeinflussung der Dämpfkraft möglich sein soll.

Diese Aufgabe wird bei einem Feder-Dämpfer-System nach dem Oberbegriff des Patentanspruchs 1 erfindungsgemäß durch die in dessen Kennzeichen angegebenen Maßnahmen gelöst. Dank dieser Maßnahmen wird sowohl bei geschlossener Verstelldrossel (nur Festdrossel wirksam), als auch bei geöffneter Verstelldrossel (zusätzlich Verstelldrossel wirksam) Dämpfungsarbeit geleistet und es werden an den Drosseln entsprechende Druckdifferenzen erzeugt. Da die Festdrossel und die Verstelldrossel zwischen den beiden Arbeitskammern und damit auch zwischen den beiden Druckspeichern angeordnet sind, werden durch die Druckdifferenzen nicht nur die Dämpfkräfte bestimmt, sondern auch die Volumenströme zu beiden Druckspeichern und damit schließlich auch die Federraten des Systems beeinflußt. Die Federraten sind somit abhängig von den Druckdifferenzen an den Drosselventilen und damit auch von der Kolbengeschwindigkeit.

Deswegen sind die Federkräfte nicht nur wegabhängig, sondern auch geschwindigkeitsabhängig. Die geschwindigkeitsabhängige Dämpfkraftverstellung (zusätzlich zur Wegabhängigkeit) bringt wiederum den Vorteil eines insgesamt straffen Feder-Dämpfer-Systems bei hochdynamischen Vorgängen, z.B. beim Anlenken, in Wechselkurven, beim Durchschlagen der Räder usw., wodurch eine spontane Fahrzeug-Reaktion erreichbar ist. Andererseits arbeitet das System bei niederfrequenten Aufbaubewegungen und eher stationären Vorgängen sehr komfortabel.

Um dies zu erreichen, ist der Bauaufwand vergleichsweise gering, denn es ist nur ein Verstellmechanismus - für das verstellbare Drosselventil - nötig, mit dem sowohl die Feder- als auch die Dämpfkraftverstellung erreichbar ist. Dies ermöglicht weiterhin eine gleichzeitige und schnelle Umschaltung von Feder- und Dämpfkraft. Die Federkraft ist ebenfalls geschwindigkeitsabhängig und ihr Verlauf kann entsprechend den Dämpferkennlinien variabel über der Geschwindigkeit gestaltet werden.

Es ist zwar schon bekannt (DE-OS 35 23 628), die beiden Arbeitskammern eines Teleskopstoßdämpfers durch verstellbare Drosselventile miteinander zu verbinden, doch sind bei dieser Bauart nicht beide Arbeitskammern mit Druckspeichern verbunden. Deswegen können die mit der erfindungsgemäßen Lösung erreichbaren Effekte nicht erzielt werden.

Es ist ferner schon vorbeschrieben worden (DE-OS 30 44 287), daß bei einem System etwa nach dem Oberbegriff des Patentanspruchs 1 abhängig von den Kolbengeschwindigkeiten die Druckspeicher von einer weitgehenden Serienschaltung zu einer parallelen Schaltung übergehen können. Bei dieser Bauart sind jedoch keine verstellbaren Drosseln vorgesehen, so daß keine aktive (gesteuerte) Beeinflussung des Feder- und Dämpferverhaltens möglich ist.

Die Erfindung und weitere vorteilhafte Einzelheiten der Erfindung sind im folgenden anhand mehrerer in der Zeichnung dargestellter Ausführungsbeispiele näher erläutert. Es zeigen

Fig. 1
ein erstes Ausführungsbeispiel in der Bauart eines teils schematisiert dargestellten Einrohrstoßdämpfers;

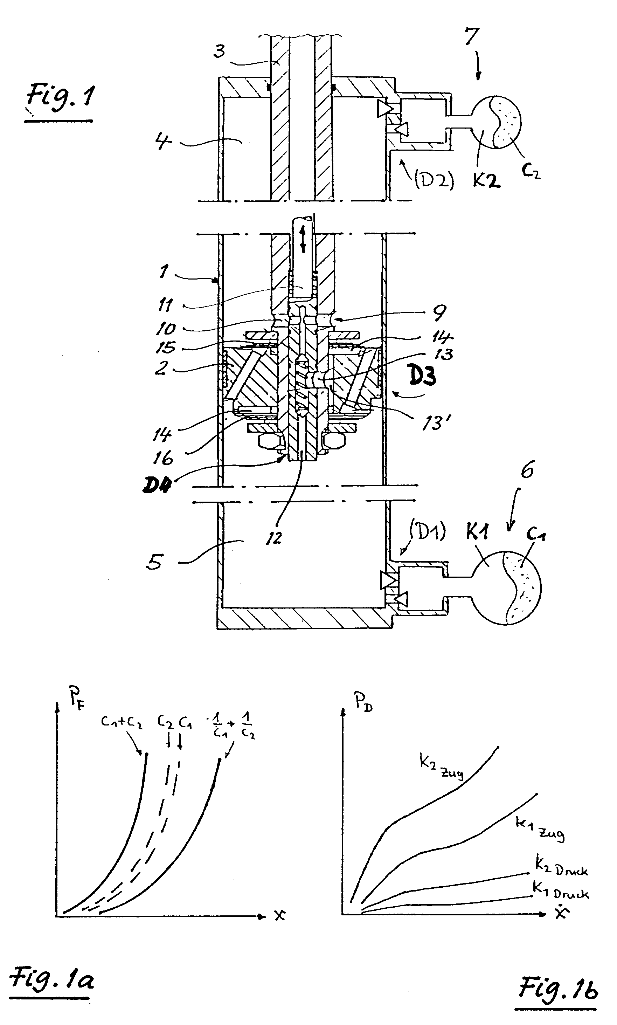

Fig. 1a und 1b
Feder- und Dämpfkraftdiagramme zu dem Ausführungsbeispiel nach Fig. 1;

Fig. 2

eine schematisierte Darstellung einer weiteren Ausführungsform;

Fig. 2a,b,c,d

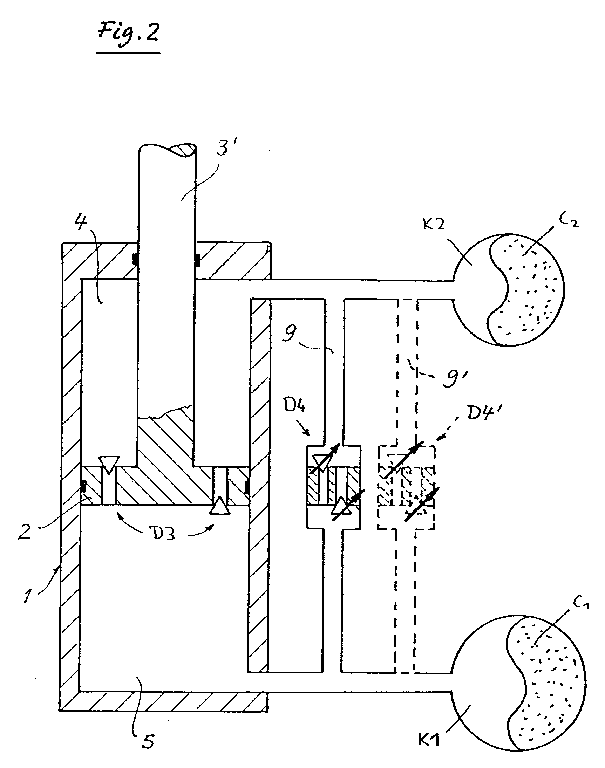

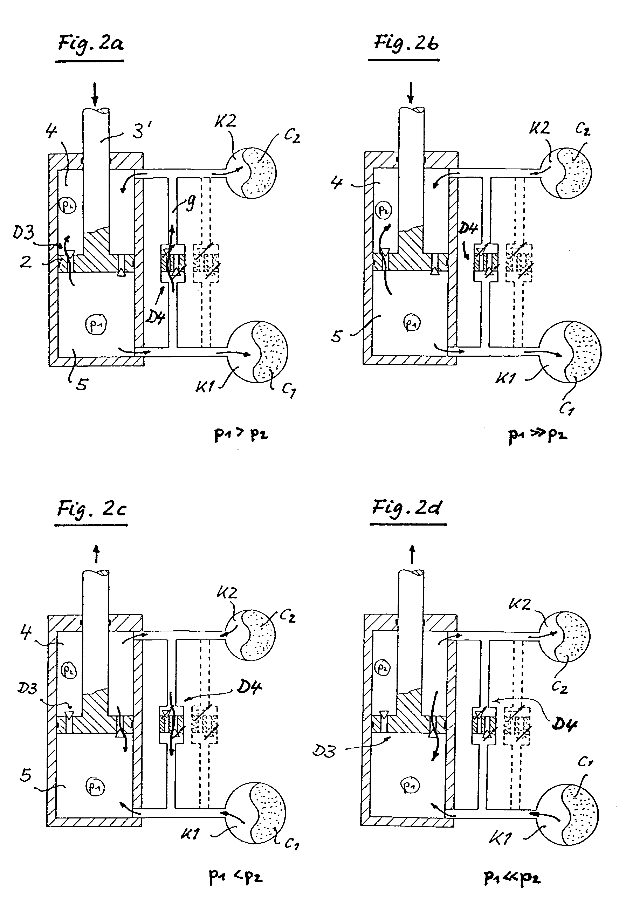

vier zu dem System nach Fig. 2 gehörende Schaltstufen;

Fig. 3

ein hydraulisches Schaltschema zu dem System nach Fig. 2;

Fig. 4

eine weitere Variante des neuen Feder-Dämpfer-Systems;

Fig. 5

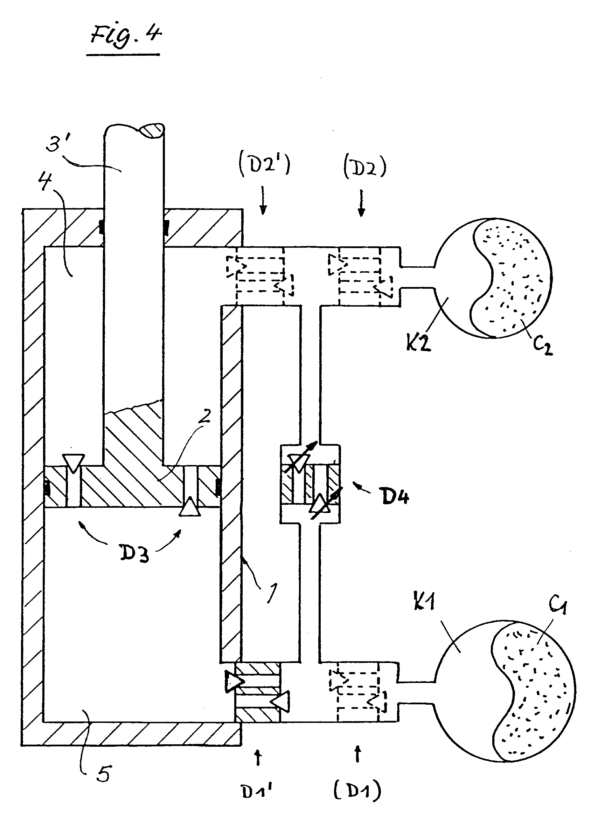

ein hydraulisches Schaltschema zu der Ausführungsform nach Fig. 4;

Fig. 6

eine weitere Ausführungsform;

Fig. 6a,b,c,d

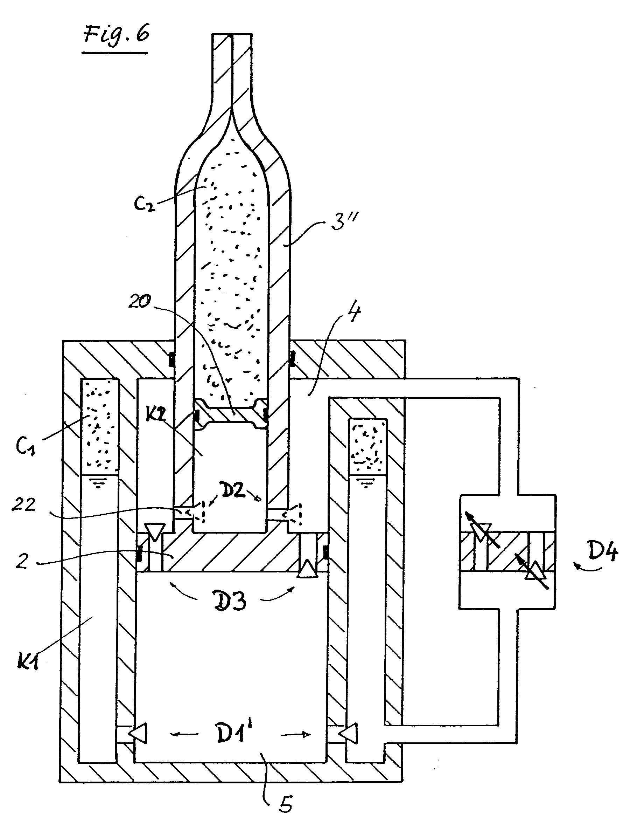

die Ausführungsform nach Fig. 5 in verschiedenen Schaltstufen;

Fig. 7

eine weitere Ausführungsform des neuen Systems;

Fig. 8

ein hydraulisches Schaltschema etwa zu der Variante nach Fig. 4;

Fig. 9

ein Feder-Kennlinienfeld etwa nach Fig. 1a.

Das Ausführungsbeispiel nach Fig. 1 zeigt einen Einrohrstoßdämpfer mit einem Zylinder 1, in dem ein Kolben 2 durch eine Kolbenstange 3 verlagerbar ist. Durch den Kolben 2 wird der mit einem Strömungsmittel gefüllte Zylinder 1 in zwei Arbeitsräume 4 und 5 unterteilt. Der untere Arbeitsraum 5 steht mit einem die Grundfederung bildenden Druckspeicher 6 und die obere Arbeitskammer 4 mit einem eine zweite Federung bildenden Druckspeicher 7 in Verbindung. Bei dem dargestellten Ausführungsbeispiel sind die beiden Druckspeicher durch hydropneumatische Federn gebildet, die ein häufig kugeliges Gehäuse mit einer Membran aufweisen, die die mit Hydrauliköl befüllte Kammer von der Gasmasse trennt.

In Fig. 1 ist die Hydraulik-Kammer des Druckspeichers 6 mit K1 bezeichnet, während für die Gasmasse die Federrate $c_1$ steht. In gleicher Weise weist der Druckspeicher 7 eine Kammer K2 und die Federrate $c_2$ auf.

Die beiden Arbeitsräume 4 und 5 stehen stets über ein Dämpfungsventilsystem herkömmlicher Bauart, das nicht verstellbar ist, miteinander in Verbindung, das Strömungskanäle im Körper des Kolbens 2 und Tellerfederpakete aufweist, die die Kanäle zumindest teilweise überdecken und differenzdruckabhängig öffnen. Diese herkömmliche Dämpfungsventileinheit wird im folgenden auch als Festdrossel D3 bezeichnet. Außer über die Festdrossel D3 sind die beiden Arbeitsräume 4 und 5 des Zylinders zusätzlich noch über einen Bypass 9 miteinander verbunden, in dem ein verstellbares Drosselventil, das im folgenden auch als Verstelldrossel D4 bezeichnet wird, vorgesehen ist.

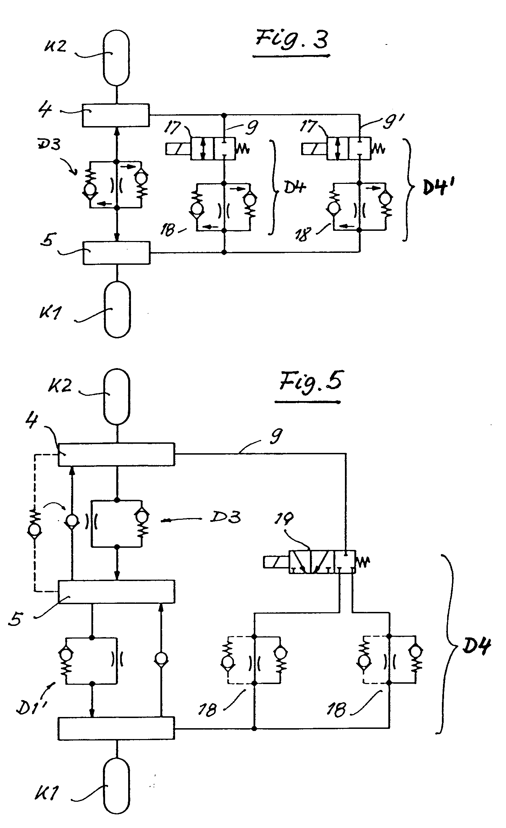

Bei dem Ausführungsbeispiel nach Fig. 1 sind der Bypass 9 und die Verstelldrossel D4 in der hohlen Kolbenstange 3 des Stoßdämpfers angeordnet. Die Festdrossel D3 und die Verstelldrossel D4 haben hier etwa einen Aufbau, wie er näher in der DE-OS 33 23 628, Fig. 3 beschrieben ist. Der Bypass 9 wird insgesamt gebildet durch die Querbohrungen 10 in der hohlen Kolbenstange 3, weiteren Querbohrungen in einem längsverschiebbaren Steuerstift 11, der eine mit Rückschlagventilen versehene Längsbohrung 12 hat. Zwischen den federbelasteten Rückschlagventilen sind im Steuerstift 11 und in der Kolbenstange 3 weitere Querbohrungen 13 vorgesehen, die über einen Längskanal 13' mit weiteren oberen und unteren taschenförmigen Ausnehmungen 14 in Verbindung stehen, die wiederum von den Federpaketen 15 und 16 ganz oder teilweise überdeckt sind. Wie aus der Schemadarstellung nach Fig. 2 erkennbar ist, können der Bypass 9 und die Verstelldrossel D4, die die Arbeitsräume 4 und 5 miteinander verbinden, auch außerhalb des Zylinderraumes ausgebildet sein. Die zwischen den beiden Arbeitsräumen wirksame Festdrossel D3 ist bei dieser Ausführungsart wiederum in der gewohnten Weise im Kolben 2 ausgebildet, der mit einer massiven Kolbenstange 3' verbunden ist. In strichlierten Linien ist angedeutet, daß parallel zu dem Bypaß 9 ein weiterer Bypass 9' vorgesehen sein kann. In dem Bypaß 9' ist dann wiederum eine Verstelldrossel D4' vorgesehen.

Das Feder-Dämpfer-System nach Fig. 1 hat in der weichen Einstellung die Verstelldrossel D4 geöffnet. In dieser Dämpfereinstellung kann das von der Kolbenstange 3 verdrängte Ölvolumen im wesentlichen ungehindert in die Kammer 1 und aufgrund der geringen Dämpfung im Kolben durch die Festdrossel D3 mit nur relatiy geringen Drosselverlusten in die Kammer 2 entweichen, wenn der Stoßdämpfer in der Druckstufe arbeitet. In der Zugstufe strömt die Arbeitsflüssigkeit in der umgekehrten Richtung. In dieser Einstellung sind beide Federkammern K1 und K2 hydraulisch nahezu in Serie geschaltet. Die Gesamtfederrate ergibt sich nach der bekannten Beziehung $1/c \approx 1/c_1 + 1/c_2$.

In den härteren Dämpfereinstellungen sei die Verstelldrossel D4 geschlossen. Der Ölaustausch zwischen den beiden Arbeitsräumen 4 und 5 erfolgt stark gedrosselt und dementsprechend wird die Druckdifferenz zwischen den beiden Arbeitsräumen erhöht. In der Druckstufe fließt daher das von der Kolbenstange 3 und zusätzlich teilweise auch vom Kolben 2 verdrängte Ölvolumen hauptsächlich in die überdruckseitige Kammer K1, während die andere Kammer K2 aufgrund des geringen Druckniveaus weniger Öl aufnimmt. Bei weiter ansteigenden Dämpfkräften gibt die Kammer K2 sogar Öl ab. Im Extremfall, wenn die Kolbenventile völlig geschlossen wären, liegt eine hydraulische Parallelschaltung beider Gasfedern vor, mit der bekannten Beziehung $c = c_1 + c_2$. Als Verdränger wirkt nun zusätzlich der Kolben 2, während in der weichsten Einstellung im wesentlichen nur die Kolbenstange 3 als Verdränger wirkte. Sofern zwischen den Arbeitsräumen 4 bzw. 5 und den Kammern K1 bzw. K2 keine zusätzlichen Ventile vorgesehen sind, wird die Dämpfarbeit zu Null. Die resultierende Gesamtfederrate verändert sich in Abhängigkeit von der Dämpfkrafteinstellung, und zwar durch die dämpfkraftabhängige Änderung der Verdrängerfläche. Für die Federn werden keine zusätzlichen Verstellventile benötigt. Bei kontinuierlicher Dämpfkraftverstellung kann somit zwischen den theoretischen Grenzfällen Serienschaltung und Parallelschaltung (wie sie in der DE-OS 35 00 601 beschrieben sind) ein Federraten-Kennfeld erzeugt werden, wie es durch Fig. 1a veranschaulicht werden soll.

Beim Überfahren eines von der Fahrbahnoberfläche nach oben abstehenden Einzelhindernisses, das z.B. über die Messung der Aufbaubeschleunigung, der Dämpfkraftanstiegsgeschwindigkeit oder auch über vorausschauende Niveaufühler sensiert wird, funktioniert das Feder-Dämpfer-System nach Fig. 1 wie folgt: Zur Verringerung der Aufbaubeschleunigungen wird zunächst auf weich geschaltet, die Verstelldrossel D4 ist offen. Das von der Kolbenstange 3 verdrängte Ölvolumen kann mit nur geringen Strömungswiderständen in beide Federkammern K1 und K2 entweichen. Um ein Durchschlagen zu verhindern und das spätere Nachschwingen des Aufbaus des Fahrzeugs zu reduzieren, muß bereits während des Einfederhubs - beispielsweise bei maximaler Kolbengeschwindigkeit - auf eine wesentlich härtere Einstellung umgestellt werden, die Verstelldrossel D4 wird geschlossen. Nun wird, abhängig vom Umschaltzeitpunkt und von der Dämpfkraftspreizung, eine mehr oder weniger große Ölmenge noch in der Druckstufe wieder aus der Kammer K2 herausbefördert und zusätzlich in die Kammer K1 verdrängt.

Damit wird erreicht, daß die zum Hubbeginn befüllte Kammer K2 durch die Umschaltung von "weich" auf "hart" bereits gegen Hubende schon wieder so weit entleert ist, daß sie für ein nachfolgendes positives (erhabenes) Einzelhindernis, bei dem auf "weich" geschaltet werden muß, sofort wieder aufnahmebereit ist. Hierfür ist allerdings Voraussetzung, daß während einer eventuellen Ausfederbewegung zwischen den beiden Einzelhindernissen die Kammer K2 nur wenig befüllt wird. Beim Ausführungsbeispiel nach Fig. 1 läßt sich dies - ohne Drosseln zwischen den Arbeitsräumen und den beiden Federkammern - dadurch erreichen, daß in der betreffenden Zugstufe bereits wieder auf "weich" geschaltet wird.

Falls auch in dieser Situation eine hohe Zugstufendämpfung, jedoch ohne nennenswerte Druckerhöhung in der Kammer K2 erwünscht ist, muß zumindest die harte Zugstufeneinstellung in eine weitere Drossel D2 gelegt werden, die eingangsseitig vor der Kammer K2 vorgesehen werden muß.

Bei stark ausgeprägten positiven Einzelhindernissen, bei denen zur Verringerung der dynamischen Radlastdifferenzen das Rad möglichst schnell wieder der Fahrbahn nachgeführt werden muß, wird zweckmäßigerweise die "harte" Einstellung des Feder-Dämpfer-Systems mit weitgehend parallel geschalteten Gasfedern zunächst beibehalten. Durch die hohe Druckdifferenz zwischen beiden Federkammern ist dann gegenüber vorbekannten Systemen eine wesentlich größere Federarbeit zur schnellen Rückführung des Rades gespeichert. Je nach Höhe des Einzelhindernisses braucht die "harte" Einstellung des Systems nur zu Beginn der Zugstufe relativ kurzzeitig beibehalten bleiben, damit nach der Radentlastung wieder ein weicher Übergang zur ursprünglichen Radlast ermöglicht wird. Damit wird beim Einrohrdämpfer nach Fig. 1 die "Aufnahmebereitschaft" der Kammer K2 für ein nachfolgendes Einzelhindernis nicht zu sehr herabgesetzt.

Die eben beschriebene Funktionsweise gilt natürlich mit umgekehrten Vorzeichen auch für "negative" Einzelhindernisse, z.B. für Schlaglöcher.

Das beschriebene System arbeitet auch wie ein Relaxationsdämpfer. Ohne die bereits angedeuteten Drosseln D1 und D2 werden die Dämpfkräfte stets über eine der beiden Federkammern K1 bzw. K2 abgestützt, wodurch Dämpfkraftspitzen federnd abgefangen und nicht auf den Fahrzeugaufbau übertragen werden.

Neben der üblichen Dämpfkraftvariation durch Verändern des Durchflußwiderstandes in einer Drossel (durch Ändern des Drosselquerschnitts oder der Federspannung der federbelasteten Ventile) kommt hier als zusätzlicher Variationsparameter noch die Durchflußmenge durch die Drossel hinzu. Die Durchflußmenge ist einerseits von den Durchflußwiderständen der einzelnen Drosseln selbst, die die Serien- oder Parallelschaltung der Federn mitbestimmen, und andererseits vom Kennlinienverlauf der einzelnen Gasfedern abhängig. Damit steht eine größere Dämpfkraft-Variationsbreite zur Verfügung. Die Federkennlinien der Gasfedern lassen sich weiterhin noch durch Gasmenge und Gasdruck beeinflussen.

In den Fig. 2a bis 2d sind am Beispiel des Systems nach Fig. 2 nochmals die Funktionsweisen erläutert.

In Fig. 2a arbeitet der Stoßdämpfer in der Druckstufe mit einer "weichen" Einstellung. Bei geöffneter Drossel D4 strömt das von der Kolbenstange 3 und teilweise vom Kolben 2 verdrängte Ölvolumen ungedrosselt in die Kammer K1 und nur wenig gedrosselt über die Drossel D4 im Bypass 9 in die Federkammer K2 bzw. in den oberen Arbeitsraum 4. Aufgrund des stärkeren Durchflußwiderstands der Drossel D3 im Kolben 2 fließt nur eine geringe Ölmenge über den Kolben 2 vom Arbeitsraum 5 in den Arbeitsraum 4.

In Fig. 2b sind die Strömungsverhältnisse in der "harten" Druckstufen-Betriebsweise dargestellt. Die Verstelldrossel D4 im Bypass 9 ist geschlossen. Deswegen kann der obere Arbeitsraum 4 nur über die Drossel D3 des Kolbens 2 mit Öl versorgt werden. Bei hoher Dämpfkraftspreizung reicht diese Ölmenge jedoch nicht zum Füllen des Arbeitsraumes 4 aus, so daß aus der Kammer K2 Öl in den Arbeitsraum 4 nachströmt.

Fig. 2c veranschaulicht die Verhältnisse in der Zugstufe mit einer weichen Einstellung des Systems und Fig. 2d die Verhältnisse in der Zugstufe mit einer harten Einstellung.

In Fig. 3 ist das hydraulische Schaltschema des Feder-Dämpfer-Systems nach Fig. 2 dargestellt, wobei zwei Bypass-Leitungen 9 und 9' und zwei Verstelldrosseln D4 und D4' vorgesehen sind, um noch mehr Variationsmöglichkeiten zur Dämpfkraft- und Federkraftbeeinflussung zu haben. Dabei kann das verstellbare Drosselventil D4 bzw. D4' ein den Bypass 9 bzw. 9' absperrendes Schaltventil 17 und in Serie dazu wenigstens eine Dämpfungsventileinheit 18 umfassen, die eine Konstant-Drossel und mindestens ein zu dieser parallel geschaltetes federbelastetes Sitzventil umfaßt.

Gemäß Fig. 3 sind, wie bereits erwähnt, zwei parallel geschaltete Konstantdrosseln als Dämpfungsventileinheiten 18 dargestellt, wobei in Serie zu jeder Konstantdrossel ein Schaltventil 17 in der Funktion eines 2/2-Wegeventils vorgesehen ist.

Gemäß Fig. 5 kann in dem Bypass 9 aber auch ein Schaltventil 19 in der Funktion eines 3/3-Wegeventils vorgesehen sein, das jeweils nur eine der beiden Dämpfungsventileinheiten 18 freigibt oder beide absperrt.

Wie man in Fig. 5 erkennt, kann zwischen dem Arbeitsraum 5 und der Kammer K1 eine weitere Drossel D1' vorgesehen werden, wie dies auch die Schemadarstellung nach Fig. 4 zeigt.

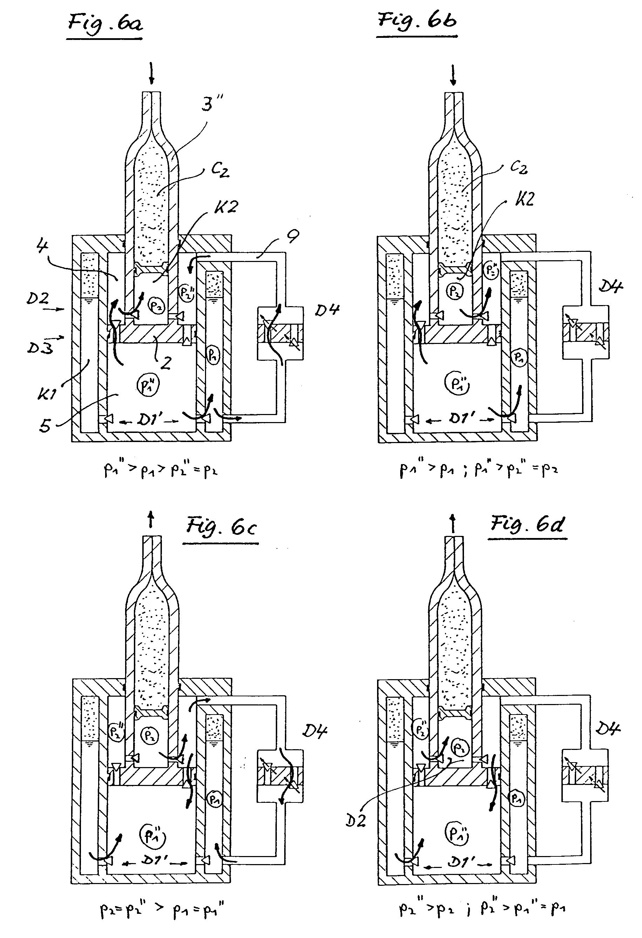

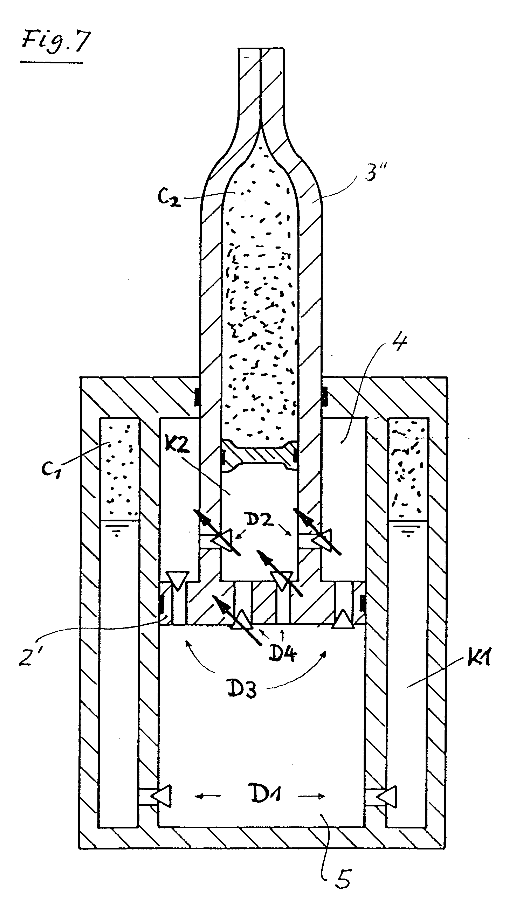

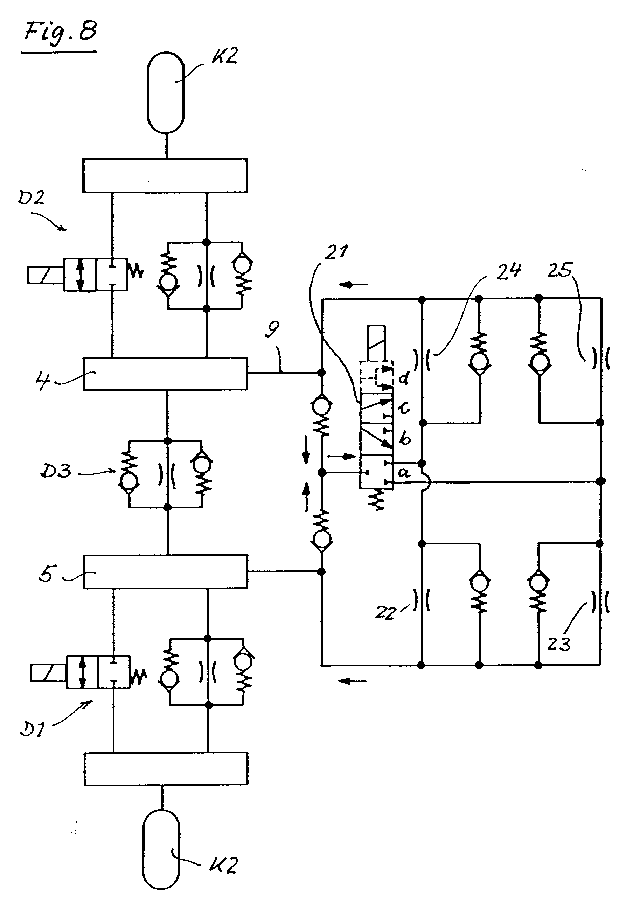

Der Stoßdämpfer nach Fig. 6 entspricht in seinem Wirkungsprinzip dem Stoßdämpfer nach Fig. 4, wobei die Kammer K1 als üblicher Zweirohrdämpfer-Ausgleichsraum und die Kammer K2 als Kolbenspeicher ausgeführt sind. Der Kolbenspeicher liegt in der hohlen Kolbenstange 3''. Der Trennkolben 20 wirkt hier gleichzeitig als Mindestdruckventil, das den Durchgang 22 bzw. die Drossel D2 zu dem Arbeitsraum 4 verschließt, wenn etwa in der Zugstufe der Druck in der Kammer K2 zu sehr abfällt.

Anhand der Fig. 6a bis d soll nun das Wirkungsprinzip des Stoßdämpfers nach Fig. 6 erläutert werden.

Fig. 6a zeigt die Arbeitsweise in der weichen Einstellung in der Druckstufe, in der D4 geöffnet ist. Das von der Kolbenstange 3'' und teilweise vom Kolben 2 verdrängte Ölvolumen strömt über die Drossel D1' in die Kammer K1 und kaum gedrosselt durch D4. Die Gefahr einer zu großen Unterdruckbildung im Arbeitsraum 4 besteht nicht, da über den Bypass 9 stets Öl in den Arbeitsraum 4 nachfließen kann.

In Fig. 6b ist die Druckstufe in ihrer harten Einstellung gezeigt, in der D4 geschlossen ist. Auch hier besteht die Gefahr eines zu großen Unterdrucks im Arbeitsraum 4 nicht, da hier das Öl aus der Kammer K2 nachfließen kann. Je größer hier der Druckdämpfungsanteil in der Festdrossel D3 des Kolbens 2 ist, desto größer ist die Ölmenge, die aus K2 abgezogen wird und desto härter ist damit auch die resultierende Gesamtfederrate.

In Fig. 6c ist die Zugstufe in ihrer weichen Einstellung bei geöffneter Drossel D4 gezeigt. Der überwiegende Ölanteil strömt hier aus dem unter Druck stehenden Arbeitsraum 4 über den Bypass 9 und die geöffnete Drossel D4 in den unteren Arbeitsraum 5. Die Kammer K1 und aufgrund des relativ geringen Druckunterschieds zwischen den beiden Arbeitsräumen 4 und 5 - auch die Kammer K2 - geben Öl an den unteren Arbeitsraum 5 ab.

Gemäß Fig. 6d ist in der harten Zugstufeneinstellung die Drossel D4 geschlossen. Dadurch steigt die Druckdifferenz zwischen den beiden Arbeitsräumen 4 und 5 stark an, da nun die gesamte Ölmenge durch die harte Drossel D3 verdrängt werden muß. Öl fließt aus dem Arbeitsraum 4 in die Kammer K2 zurück. Um die Ölaufnahmefähigkeit für nachfolgende Einzelhindernisse nicht zu sehr zu vermindern, kann dabei zur Beschränkung des Rückflusses eine zusätzliche Drossel D2 vorgesehen werden, die erst bei hohen Zugstufenkräften wirksam wird.

Bei der Ausführungsform nach Fig. 7 ist abweichend von dem Beispiel nach Fig. 6 die Verstelldrossel D4 im Kolben 2' untergebracht und verbindet den unteren Arbeitsraum 5 mit der Kammer K2. Die Verstelldrossel D4 kann über einen gemeinsamen Schieber abwechselnd zur zusätzlichen Drossel D2 so betätigt werden, daß beim Öffnen von D4 gleichzeitig D2 geschlossen wird und umgekehrt. Bei in Serie geschalteten Federn wird hierdurch die Verbindung des Arbeitsraumes 4 mit der Kammer K2 unterbrochen, so daß keine Relaxationsdämpfung mehr vorliegt. Dies kann u.U. zur Verbesserung des Ansprechverhaltens des Fahrzeugs, beispielsweise beim Lenken, erwünscht sein.

Fig. 8 zeigt ein weiteres hydraulisches Schaltschema mit der Festdrossel D3 zwischen den Arbeitsräumen 4 und 5. Der Arbeitsraum 4 ist über eine schaltbare Drossel D2 mit der Kammer K2 verbunden, während der Arbeitsraum 5 über eine schaltbare Drossel D1 mit der Kammer K1 verbunden ist. Die verstellbare Drossel zur Steuerung des Durchflusses durch den Bypass 9 zwischen den Arbeitsräumen 4 und 5 umfaßt hier ein Schaltventil 21 in der Funktion eines 4/2-Wegeventils, das eine getrennte Leitungsführung durch die Konstantdrosseln 22, 23, 24 und 25 für die Zug- und Druckstufe ermöglicht. Ist das Feld a des Wegeventils geschaltet, hat das System eine besonders harte Einstellung, denn über den Bypass 9 kann kein Öl fließen.

Ist das Feld b geschaltet, so ist in der Druckstufe ein Überströmen des Öls aus dem Arbeitsraum 5 in den Arbeitsraum 4 außer über die Konstantdrossel D3 noch über die Drossel 25 und das ihr parallel geschaltete federbelastete Sitzventil möglich.

Wenn das Feld c geschaltet ist, kann das über den Bypass strömende Öl über die Drossel 24 und das parallel geschaltete federbelastete Sitzventil strömen, die anders eingestellt sein können als die Drossel 25 und das zugehörige Sitzventil.

Mit der Schaltstellung d kann in der Druckstufe das Öl über die beiden Konstantdrosseln 24 und 25 und die ihnen paralleln federbelasteten Sitzventile strömen, was eine besonders geringe Dämpfung über den Bypass 9 bewirkt.

In der Zugstufe sind die Verhältnisse analog, wobei die Konstantdrosseln 22 und 23 und die zugehörigen federbelasteten Sitzventile wirksam werden.

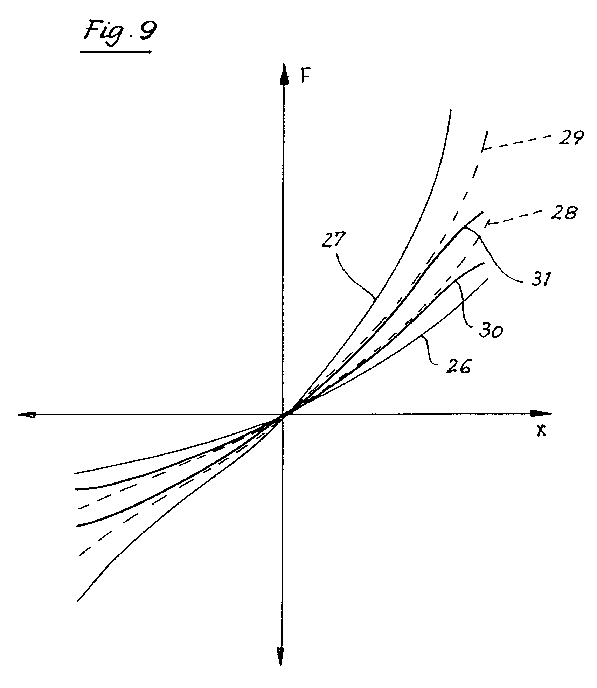

In Fig. 9 ist die Federkraft F über den Verlagerungsweg x aufgetragen. Die Kurve 26 steht für eine Schaltung, bei der die Federn nahezu in Serie geschaltet sind: $1/c \approx 1/c_1 + 1/c_2$. Die Kurve 27 steht für eine Schaltung des Systems, bei der die Gasfedern parallel geschaltet sind: $c = c_1 + c_2$. Die strichlierten Kurven 28 und 29 würden theoretisch die gerade mit der vorliegenden Erfindung erreichbaren Zwischeneinstellungen des Feder-Dämpfer-Systems veranschaulichen, jedoch nur wenn die Verlagerungsgeschwindigkeit konstant wäre. Da das System bei extremen Auslenkungen aber einen Umkehrpunkt hat, nimmt im Bereich dieser Umkehrpunkte die Verlagerungsgeschwindigkeit bis gegen Null ab. Daher nehmen auch die Dämpfkräfte in diesen Bereichen wieder ab. Weil die Dämpfkräfte aber nach der vorliegenden Erfindung auch die Federkräfte deutlich beeinflussen, haben die Kurven 30 und 31 zu den Umkehrbereichen hin einen weniger progressiven Verlauf.

Es sei noch angemerkt, daß über die zwischen den Arbeitsräumen 4 und 5 liegenden Drosseln im stationären Zustand stets mehr oder weniger schnell - abhängig von der jeweils gewählten Schaltstufe - ein Druckausgleich zwischen den beiden Arbeitsräumen 4 und 5 und damit auch zwischen den beiden Kammern K1 und K2 erfolgt.

**Patentansprüche**

1. Feder-Dämpfer-System für Fahrzeuge, mit einem Teleskopstoßdämpfer, der einen von einer Kolbenstange (3, 3', 3'') in einem Zylinder (1) verlagerbaren Kolben (2) aufweist, der den mit Strömungsmittel gefüllten Zylinder (1) in zwei Arbeitsräume (4, 5) unterteilt, welche mit jeweils einem Druckspeicher (6, 7) in Verbindung stehen, wobei beim Verlagern des Kolbens (2, 2') ein Dämpfungsventilsystem (D3) durchströmt wird und ferner die beiden Druckspeicher (6, 7) miteinander in Strömungsverbindung bringbar sind,
dadurch gekennzeichnet, daß die beiden Arbeitsräume (4, 5) stets über mindestens ein nicht verstellbares Drosselventil (Festdrossel D3) und zusätzlich über einen Bypaß (9) verbunden sind, in dem wenigstens ein verstellbares Drosselventil (Verstelldrossel D4, D4') vorgesehen ist.

2. System nach Anspruch 1, dadurch gekennzeichnet, daß der Bypaß (9) und das verstellbare Drosselventil (Verstelldrossel D4) im Kolben (2, 2') oder in der Kolbenstange (3', 3'') des Stoßdämpfers angeordnet sind.

3. System nach Anspruch 1, dadurch gekennzeichnet, daß der Bypaß (9) und das verstellbare Drosselventil (Verstelldrossel D4) außerhalb des Zylinderraumes ausgebildet sind.

4. System nach Anspruch 1, dadurch gekennzeichnet, daß das verstellbare Drosselventil (D4, D4') ein den Bypaß (9, 9') absperrendes Schaltventil (17) und in Serie dazu wenigstens eine Dämpfungsventileinheit (18) umfaßt, die eine Konstant-Drossel und mindestens ein zu dieser parallel geschaltetes federbelastetes Sitzventil umfaßt.

5. System nach Anspruch 4, dadurch gekennzeichnet, daß das verstellbare Drosselventil (D4 und D4') mindestens zwei parallel geschaltete Konstant-Drosseln (Dämpfungsventileinheit 18) umfaßt.

6. System nach Anspruch 5, dadurch gekennzeichnet, daß in Serie zu jeder Konstant-Drossel ein Schaltventil (17) in der Funktion eines 2/2-Wegeventils vorgesehen ist.

**7.** System nach Anspruch 5, dadurch gekennzeichnet, daß in dem Bypaß (9) ein Schaltventil (19) in der Funktion 3/3-Wegeventils vorgesehen ist, das jeweils nur eine der beiden Dämpfungsventileinheiten (18) freigibt oder beide absperrt.

**8.** System nach Anspruch 5, dadurch gekennzeichnet, daß das Schaltventil (21) in der Funktion eines 4/2 Wegeventils eine getrennte Leitungsführung durch die Konstant-Drosseln (22, 23, 24, 25) für die Zug- und Druckstufe des Stoßdämpfers aufweist.

**9.** System nach Anspruch 1, dadurch gekennzeichnet, daß zwischen einer Arbeitskammer (5) des Stoßdämpfers und dem zugeordneten Druckspeicher (Kammer K1) mindestens eine weitere Drossel (D1') vorgesehen ist.

**Claims**

**1.** A spring damper system for vehicles, comprising a telescopic shock-absorber comprising a piston (2) movable by a piston rod (3, 3', 3'') in a cylinder (1) and dividing the cylinder (1), which is filled with a fluid medium, into two working chambers (4, 5) each connected to a pressure reservoir (6, 7), so that when the piston (2, 2') moves a flow occurs through a damping valve system (D3) and the two pressure reservoirs (6, 7) can be connected together for flow purposes, characterised in that the two working chambers (4, 5) are always connected by at least one non-adjustable throttle valve (fixed throttle D3) and, additionally, via a bypass (9) containing at least one adjustable throttle valve (adjustable throttle D4, D4').

**2.** A system according to claim 1, characterised in that the bypass (9) and the adjustable throttle valve (adjustable throttle D4) are disposed in the piston (2, 2') or in the piston rod (3', 3'') of the shock- absorber.

**3.** A system according to claim 1, characterised in that the bypass (9) and the adjustable throttle valve (adjustable throttle D4) are formed outside the cylinder chamber.

**4.** A system according to claim 1, characterised in that the adjustable throttle valve (D4, D4') comprises a control valve (17) blocking the bypass (9, 9') and in series with at least one damping valve unit (18) comprising a constant throttle connected in parallel to at least one spring-loaded seat valve.

**5.** A system according to claim 4, characterised in that the adjustable throttle valve (D4 and D4') comprises at least two parallel-connected constant throttles (damping valve unit 18).

**6.** A system according to claim 5, characterised in that a control valve (17) operating as a 2/2-way valve is provided in series with at least one constant throttle.

**7.** A system according to claim 5, characterised in that a control valve (19) operating as a 3/3-way valve is provided in the bypass (9) and releases only one of the two damping valve units (18) at one time or blocks both.

**8.** A system according to claim 5, characterised in that the control valve (21) operates as a 4/2-way valve and has a separate line through the constant throttles (22, 23, 24, 25) for the suction and pressure stage of the shock-absorber.

**9.** A system according to claim 1, characterised in that at least one additional throttle (D1') is provided between a shock-absorber working chamber (5) and the associated pressure reservoir (chamber (K1).

**Revendications**

**1.** Système à ressort-amortisseur pour véhicules, avec un amortisseur télescopique, qui comprend un piston (2) pouvant être déplacé par une tige de piston (3, 3', 3'') dans un cylindre (1), piston qui subdivise le cylindre (1) rempli d'un agent d'écoulement en deux chambres de travail (4, 5), qui sont en communication avec un accumulateur hydraulique respectif de pression (6, 7), système dans lequel lors du déplacement du piston (2, 2') un système de soupape d'amortissement (D3) est traversé par l'écoulement et en outre les deux accumulateurs de pression (6, 7) sont amenés en liaison d'écoulement l'un avec l'autre, caractérisé en ce que les deux chambres de travail (4, 5) sont toujours en communication par au moins une soupape à étranglement non réglable (étranglement fixe D3) et en plus par un by-pass (9), dans lequel est prévue une soupape à étranglement réglable (étranglement réglable D4).

**2.** Système selon la revendication 1, caractérisé en ce que le by-pass (9) et la soupape à étranglement réglable (étranglement réglable D4) sont placés dans le piston (2, 2') ou dans la tige de piston (3', 3'') de l'amortisseur.

3. Système selon la revendication 1, caractérisé en ce que le by-pass (9) et la soupape à étranglement réglable (étranglement réglable D4) sont realisés en dehors de la chambre du cylindre.

4. Système selon la revendication 1, caractérisé en ce que la soupape à étranglement réglable (D4, D4') comprend une soupape de commande (17) verrouillant le by-pass (9, 9') et au moins un dispositif d'amortissement (18) en série avec elle, qui comporte un étranglement constant et au moins une soupape à siège chargée par ressort et montée parallèlement à celui-ci.

5. Système selon la revendication 4, caractérisé en ce que la soupape à étranglement réglable (D4 et D4') comprend au moins deux étranglements constants montés en parallèle (dispositif de soupape d'amortissement 18).

6. Système selon la revendication 5, caractérisé en ce qu'une soupape de commande (17) est prévue en série avec chaque étranglement constant dans la fonction d'un distributeur à 2/2 voies.

7. Système selon la revendication 5, caractérisé en ce qu'une soupape de commutation (19) est prévue dans le by-pass (9) dans la fonction d'un distributeur à 3/3 voies, qui respectivement libère un seul des deux dispositifs de soupape d'amortissement (18) ou verrouille les deux.

8. Système selon la revendication 5, caractérisé en ce que la soupape de commande (21) dans la fonction d'un distributeur à 4/2 voies comprend un guidage de conduite séparé à travers les étranglements constants (22, 23, 24, 25) pour l'étape de traction et la phase de compression de l'amortisseur.

9. Système selon la revendication 1, caractérisé en ce qu'entre une chambre de travail (5) de l'amortisseur et l'accumulateur hydraulique associé (chambre K1) est prévu au moins un autre étranglement (D1').

Fig.1

Fig.1a

Fig.1b

Fig.2

Fig. 2a

Fig. 26

$p_1 > p_2$

$p_1 \gg p_2$

Fig. 2c

Fig. 2d

$p_1 < p_2$

$p_1 \ll p_2$

Fig. 3

Fig. 5

*Fig.4*

Fig.6

## Fig. 6a

3"

$C_2$

K2

9

4

D2

D3

2

K1

5

$D4$

$P_2''$

$P_2$

$P_1$

$P_1''$

$D1'$

$p_1'' > p_1 > p_2'' = p_2$

## Fig. 6b

$C_2$

K2

$D4$

$P_2''$

$P_2$

$P_1$

$P_1''$

$D1'$

$p_1'' > p_1 \; ; \; p_2'' > p_2'' = p_2$

## Fig. 6c

$D4$

$P_2''$

$P_2$

$P_1$

$P_1''$

$D1'$

$p_2 = p_2'' > p_1 = p_1''$

## Fig. 6d

$D4$

$P_2''$

$P_2$

$P_1$

$P_1''$

D2

$D1'$

$p_2'' > p_2 \; ; \; p_2'' > p_1'' = p_1$

*Fig.7*

**Fig.8**

Fig. 9